# EUROPÄISCHE PATENTSCHRIFT

(11) **EP 4 086 076 B1**
(45) Veröffentlichungstag und Bekanntmachung des Hinweises auf die Patenterteilung: **02.07.2025**
(21) Anmeldenummer: 22171936.2
(22) Anmeldetag: 05.05.2022
(51) Int. Cl.: B32B 38/18, B42D 25/328, B42D 25/351, B42D 25/47

(54) **VERFAHREN ZUM HERSTELLEN EINES LAMINATIONSKÖRPERS MIT INTEGRIERTEM BELICHTUNGSHOLOGRAMM**
METHOD FOR PRODUCING A LAMINATION BODY WITH INTEGRATED HOLOGRAM
PROCÉDÉ DE FABRICATION D'UN CORPS DE LAMINATION À HOLOGRAMME D'EXPOSITION INTÉGRÉ

(30) Priorität: 05.05.2021 DE 102021204558
(43) Veröffentlichungstag der Anmeldung: 09.11.2022
(73) Patentinhaber: Bundesdruckerei GmbH, 10969 Berlin (DE)
(72) Erfinder: Riebe, Olaf, 10827 Berlin (DE); Seijo-Bollin, Hans-Peter, 10245 Berlin (DE); Stasiak, Michael, 15711 Königs Wusterhausen (DE); Siebert, Martin, 10965 Berlin (DE); Felske, Thomas, 14165 Berlin (DE)
(74) Vertreter: Patentanwälte Bressel und Partner mbB

(56) Entgegenhaltungen:
- EP-B1- 2 344 342
- US-A1- 2015 220 056
- US-B2- 7 997 496

## Beschreibung

Die Erfindung betrifft eine Herstellung von auch als Datenkarten bezeichneten Laminationskörper mit integriertem Belichtungshologramm, wie sie beispielsweise für Wert- und Sicherheitsdokumente verwendet werden.

Aus dem Stand der Technik ist es bekannt, Sicherheitsdokumente als Laminationskörper auszubilden oder einen Laminationskörper beispielsweise in Form einer Datenseite als Passkarte in ein Sicherheitsdokument zu integrieren. Flache Laminationskörper in Kartenform, insbesondere wenn in diesen Informationen gespeichert sind oder diese für eine Speicherung von Informationen vorgesehen ist, werden auch als Datenkarten bezeichnet. Eine Datenkarte im Sinne der Erfindung besteht dabei aus mindestens zwei als Folien ausgebildeten Substratschichten wobei mindestens eine der Substratschichten als transparente Schicht ausgeführt ist.

Dokumente werden als Sicherheitsdokumente bezeichnet, wenn sie ein oder mehrere Merkmale aufweisen, die ein Nachahmen, Verfälschen und/oder unautorisiertes Herstellen erschweren oder unmöglich machen. Als Sicherheitsmerkmale werden auch solche Merkmale bezeichnet, mit denen eine Information abgesichert wird, um deren Verfälschung und/oder Austausch in einem Dokument zu erschweren und/oder feststellen zu können. Sicherheitsdokumente umfassen beispielsweise Ausweise, Identitätskarten, Pässe, Führerscheine und Ähnliches.

Gegenstände, in denen ein Sicherheitsmerkmal ausgebildet ist, werden auch als Sicherheitselemente bezeichnet. Sicherheitsdokumente sind im Sinne dieser Definition auch jeweils ein Sicherheitselement.

Im Stand der Technik ist es bekannt, als Sicherheitsmerkmal bzw. Sicherheitselement in Sicherheitsdokumenten Hologramme zu verwenden. Hologramme werden in unterschiedliche Klassen unterschieden. Zum einen können Hologramme danach unterschieden werden, ob sie sogenannte dünne oder dicke Hologramme sind. Dünne Hologramme sind jene Hologramme, bei denen die Speicherung der holografischen Information in einer Schicht erfolgt, deren Schichtstärke in der Größenordnung der Wellenlänge des Lichts liegt, das von den Hologrammstrukturen gebeugt wird. Als dicke Hologramme werden hingegen Hologramme bezeichnet, bei denen die Hologramminformation in einem Volumen gespeichert ist, dessen Schichtstärke einem Vielfachen der Wellenlänge des Lichts, beispielsweise etwa einem Zehnfachen der Wellenlänge des Lichts, entspricht, das von den entsprechenden Hologrammstrukturen gebeugt wird. Ferner ist eine Unterscheidung darüber möglich, ob die holografischen Strukturen als Relief an einer Oberfläche ausgebildet sind oder mittels einer Belichtung in einem fotografischen Verfahren in eine Materialschicht belichtet sind. Als Belichtungshologramme werden hier jene Hologramme aufgefasst, bei denen die holografische Information in eine fotoempfindliche Schicht belichtet ist und die holografische Information im Innern der Schicht und nicht in der Oberflächenstruktur gespeichert ist.

Die EP 2 344 342 B1 beschreibt eine Karte, insbesondere Kreditkarte, Ausweiskarte, Bankkarte oder sonstige Wertkarte, die mehrere miteinander laminierte Schichten aufweist, wobei zwischen einer ersten Kartenschicht und einer zweiten Kartenschicht ein Sicherheitselement eingebettet ist, das eine Kunststoff- oder Lackschicht mit einer Reliefstruktur, insbesondere einer Beugungsstruktur, aufweist, wobei die Reliefstruktur erste Reliefbereiche mit ersten Bildelementen und zweite Reliefbereiche mit zweiten Bildelementen aufweist, wobei die Bildelemente der ersten Reliefbereiche eine unter Umgebungsbedingungen visuell erkennbare erste Darstellung erzeugen, und das Sicherheitselement mit seinen beiden Hauptflächen mittels einer ersten Klebstoffschicht mit der ersten Kartenschicht und mittels einer zweiten Klebstoffschicht mit der zweiten Kartenschicht verklebt ist, dadurch gekennzeichnet, dass die Bildelemente der zweiten Reliefbereiche eine unter Umgebungsbedingungen visuell nicht erkennbare zweite Darstellung erzeugen, und dass die erste und die zweite Klebstoffschicht aus einem Klebstoff besteht, der gleich oder verschieden ist und ausgewählt ist aus der Gruppe, die aus physikalisch trocknenden Klebstoffen und wärmevernetzbaren Klebstoffen besteht, und dass, wenn mindestens einer der Klebstoffe ein wärmevernetzbarer Klebstoff ist, die Vernetzungstemperatur des Klebstoffs geringer ist als die Erweichungstemperatur der Kunststoff- oder der Lackschicht des Sicherheitselements, in der die Reliefstruktur vorliegt.

Auch die US 7,997,496 B2 zeigt eine laminierte mehrschichtige Karte, die mit persönlichen Informationen bedruckt werden kann, wobei die Karte ein eingeschlossenes Sicherheitselement enthält; wobei das Sicherheitselement eine druckempfindliche Klebeschicht enthält. Das Sicherheitselement weist eine Prägestruktur auf.

Die US 2015/220056 A1 beschreibt poly- oder copolycarbonatbasierte Sicherheits- und/oder Wertdokumente, die in den Kartenkörper integriert wenigstens ein Hologramm enthalten sowie ein Verfahren zur Herstellung solcher Sicherheits- und/oder Wertdokumente.

Aus der EP 0 896 260 A2 ist eine Vorrichtung zur Herstellung von Hologrammen aus einem Masterhologramm einer Mattscheibe bekannt. Ein das Masterhologramm aufweisender Hologrammmaster wird in Kontakt mit einer als Film ausgebildeten Hologrammschicht gebracht. Hierbei ist der Film vor dem Hologrammmaster mit dem Masterhologramm angeordnet. Das Masterhologramm ist ein Reflexionshologramm, sodass bei einem Durchstrahlen des Films ein Teil des Lichts von dem Hologrammmaster, d.h. dem Masterhologramm, reflektierend gebeugt wird und so mit dem Licht im Film interferiert, welches diesen Film durchstrahlt. Hierdurch wird in Kontaktkopie das Masterhologramm des Hologrammmasters kopiert. Um ein solches kopiertes Hologramm zu individualisieren, wird das zur Beleuchtung verwendete kohärente Licht vor dem Durchstrahlen des Films über einen Modulator geführt, der die kohärente Strahlung räumlich moduliert. Solche Modulatoren werden auch als Spatial Light Modulatoren (SLM) bezeichnet. Sie können beispielsweise aus Flüssigkristallzellen wie bei einem Flüssigkristallbildschirm (LCD) ausgebildet sein. In der angegebenen Weise hergestellte Hologramme werden beispielsweise unter der Marke Identigram verwendet und als Sicherheitselemente in Passkarten und Personalausweise der Bundesrepublik Deutschland eingearbeitet.

Diese bekannten Hologramme sind Belichtungshologramme und werden vollflächig auf die Datenkarten, insbesondere unter Druckanwendung thermisch gefügte Laminationskörper, mittels eines Klebers aufgebracht und durch eine äußere Schutzschicht gegenüber Umwelteinflüssen geschützt.

In der Regel werden hierzu flüssige Klebersysteme verwendet. Ein Aufkleben dieser Hologramme auf die bereits vorgefertigten Datenkarten mittels eines Flüssigklebers ist jedoch prozesstechnisch schwierig. Bei dem Prozess des Aufklebens können Lufteinschlüsse zwischen dem bereits fertig laminierten Grundkörper und der Hologrammschicht gebildet werden, welches einen Qualitätsfehler darstellt, der zum Ausschuss des so hergestellten Sicherheitsdokumentkörpers führt.

Die Datenkarten werden in der Regel aus mehreren thermoplastischen Einzelfolien mittels Anwendung von Druck und Temperatur zu einem kompakten Körper laminiert, wonach die einzelnen Schichten nicht mehr zerstörungsfrei zu trennen sind.

Werden hingegen die einzelnen Schichten einer Datenkarten mittels Kleber miteinander verbunden, so besteht potenziell die Gefahr, dass ein Fälscher hier Angriffspunkte findet, die einzelnen Schichten wieder zu trennen. Ein Fälscher kann hierbei die beispielsweise die thermischen, mechanischen oder chemischen Unterschiede zwischen Kleber und den Folienschichten für seine Zwecke nutzen. Aus diesem Grund ist eine Klebeschicht in Bezug auf eine Delamination mit dem Zweck, die Hologrammschicht als Ganzes auszutauschen, in der Regel leichter angreifbar als eine Verbindung zwischen gleichartigen, thermisch, insbesondere unter Druckanwendung, miteinander laminierten Materialschichten.

Der Erfindung liegt daher die Aufgabe zugrunde, ein verbessertes Verfahren zur Herstellung eine Laminationskörpers mit einem integrierten Belichtungshologramm zu schaffen, welches die Einfügung des Belichtungshologramms verbessert und die Fälschungssicherheit, insbesondere im Hinblick auf einen möglichen Austausch des Belichtungshologramms, verbessern sowie eine größere Flexibilität hinsichtlich der Anordnung und Platzierung des Belichtungshologramms in einem Dokumentkörper aufweist.

Die Erfindung wird durch ein Verfahren mit den Merkmalen des Patentanspruchs 1 geschaffen. Vorteilhafte Ausgestaltungen der Erfindung ergeben sich aus den Unteransprüchen.

Der Erfindung liegt die Idee zugrunde, das Belichtungshologramm hinsichtlich seiner Größe so auszubilden, dass dessen Fläche nicht die gesamte Oberfläche eines aus mehreren Lagen zusammengeschichteten dünnen Dokument- oder Laminationskörpers ausfüllt und die Belichtungshologrammschicht zwischen zwei von mehreren Substratschichten anzuordnen, die mit ihren Flächen unmittelbar aufeinander laminiert werden. Hierbei wird die Belichtungshologrammschicht, in der das Belichtungshologramm gespeichert ist, so angeordnet, dass umlaufend, und zwar vollständig umlaufend, jeweils von den beiden unmittelbar miteinander verbundenen Substratschichten, zwischen denen das Belichtungshologrammsubstrat angeordnet ist, aufeinander laminiert werden. Die Belichtungshologrammschicht ist somit sowohl an ihrer Unter- als auch an ihrer Oberseite jeweils durch eine der beiden Substratschichten vollständig abgedeckt als auch umlaufend von einem Bereich umgeben, in dem die beiden Substratschichten flächig miteinander unmittelbar zusammengefügt sind. Somit ist weder seitlich noch von einer Ober- oder Unterseite ein Angriff auf die Belichtungshologrammschicht möglich. Um eine Delaminationsneigung in dem Flächenbereich auszuschließen, in dem die Belichtungshologrammschicht in den Laminationskörper integriert ist, ist vorgesehen, dass die Belichtungshologrammschicht mit einem Kleber zumindest mit einer der beiden Substratschichten, zwischen denen die Belichtungshologrammschicht angeordnet ist und die unmittelbar aufeinander umlaufend laminiert sind, verbunden ist. Hierdurch erhält man eine hohe Flexibilität hinsichtlich der Anordnung in der Belichtungshologrammschicht mit dem darin gespeicherten Belichtungshologramm und zugleich einen verbesserten Schutz gegenüber Manipulationen an dem Belichtungshologramm. Darüber hinaus werden auch die Handhabung und Fertigung flexibilisiert und ein Auftreten von Fehlern, die zu einem Ausschuss bei der Fertigung führen, reduziert.

### Definitionen

Ein Belichtungshologramm ist ein Hologramm, welches in ein fotoempfindliches Material belichtet ist und im Innern des fotoempfindlichen Materials gespeichert ist. Nicht als Belichtungshologramm werden solche Hologramme aufgefasst, bei denen eine Oberflächenschicht belichtet wird und anschließend in nachfolgenden Verfahrensschritten die Oberfläche des belichteten Materials verändert wird, um das Hologramm in der Oberflächenstruktur des belichteten Materials zu speichern.

Ein dünnes Hologramm ist ein Hologramm, bei dem die Hologramminformation in einer Materialschicht gespeichert ist, deren Schichtstärke in der Größenordnung der Wellenlänge des Lichts liegt, das von den Hologrammstrukturen gebeugt wird.

Ein Volumenhologramm ist ein Hologramm, bei dem die holografische Information in einem Volumenbereich gespeichert ist, dessen Schichtstärke einem Vielfachen der Wellenlänge des Lichts entspricht, welches von den Hologrammstrukturen gebeugt wird.

Ein Volumenreflexionshologramm ist ein Hologramm, bei dem bei der Belichtung das Referenzlicht von einer Seite und das Objektlicht von einer diametral gegenüberliegenden Seite in das Aufzeichnungsmaterial eintreten. Das Objektlicht kann auch durch Beugung an einer Schicht erzeugt sein, die durch das fotografische Aufzeichnungsmaterial von dem Referenzlicht beleuchtet ist und das Objektlicht durch eine reflektierende Beugung an der Hologrammschicht erzeugt wird.

Ein Transmissionshologramm ist ein Hologramm, bei dem das Objektlicht und das Referenzlicht bei der Erzeugung über dieselbe Oberfläche in das fotografische Material eintreten, in dem das Transmissionshologramm gespeichert wird.

Als Substratschicht wird eine selbsttragende körperliche Schicht bezeichnet, die mit anderen selbsttragenden Schichten zu einem Laminationskörper zusammengefügt werden. Beispielsweise sind Folien Substratschichten.

Als Materialschicht wird eine Schicht eines Festkörpers bezeichnet, die hinsichtlich zumindest einer Beschaffenheit einheitlich ist. Bei einem Laminationskörper korrespondiert mit jeder Substratschicht, die zu dem Laminationskörper im Laminationsschritt mit anderen Substratschichten zusammengefügt wird, mindestens eine Materialschicht in dem Laminationskörper. Besteht die eine Substratschicht selbst aus mehreren Materialschichten, so korrespondiert die eine Substratschicht mit mehreren Materialschichten im Laminationskörper.

Eine Belichtungshologrammschicht ist eine Schicht, in der ein Hologramm gespeichert ist oder speicherbar ist. Diese kann beispielsweise eine fotoempfindliche Schicht und eine Trägerschicht umfassen. Beispielsweise ist die fotoempfindliche Schicht als Fotopolymer ausgebildet und die Trägerschicht beispielsweise aus Polyurethan (PIT) gefertigt. Die Belichtungshologrammschicht kann jedoch weitere Materialschichten, wie beispielsweise eine Schutzschicht oder mehrere Schutzschichten, umfassen. Vorzugsweise ist eine Belichtungshologrammschicht eine Schicht, in der in einer entwickelten und fixierten fotoempfindlichen Schicht ein Belichtungshologramm gespeichert ist. Eine Belichtungshologrammschicht wird, obwohl sie eine selbsttragende Schicht ist, die mit anderen Schichten zu einem Laminationskörper zusammengefasst wird, hier nicht unter dem Begriff Substratschicht gefasst. Im Sinne dieser Beschreibung ist mit dem Begriff Substratschicht die Belichtungshologrammschicht nicht gemeint.

Als fotoempfindliche Schicht wird jene Schicht bezeichnet, in die mittels eines Belichtungsprozesses Interferenzstrukturen, die ein Hologramm bilden, einschreibbar sind und/oder eingeschrieben wurden. Somit wird auch eine Schicht, in die ein Hologramm belichtet wurde und die entwickelt und fixiert ist, noch als fotoempfindliche Schicht bezeichnet, obwohl diese durch Licht nicht mehr veränderbar ist.

Als Laminierung oder Laminieren wird hier der Vorgang bezeichnet, bei welchem mehrere Substratschichten aus thermoplastischen Kunststoffen bei erhöhter Temperatur und mittels Druckes zusammengepresst werden, und dabei durch wechselseitige Diffusion der Polymere in der Grenzschicht ein fester Verbund zwischen den Schichten hergestellt wird. Auf diese Weise werden der Laminationskörper bzw. die Datenkarte gebildet. Bestehen die Substratschichten, die zur Datenkarte laminiert werden aus Polycarbonat, so benötigt man zum Laminieren beispielsweise Temperaturen im Bereich von 165°C bis 185°C und Drücke im Bereich von 20 N/cm² bis 120 N/cm². Das Laminieren in der beschreiben Weise wird hier auch als Druck-Temperatur-Laminieren bezeichnet. Analog werden die Laminierung als Druck-Temperatur-Laminierung, ein Laminationsschritt als ein Druck-Temperatur-Laminationsschritt und das Laminationsverfahren als Druck-Temperatur-Laminationsverfahren bezeichnet.

Laminationskörper, die bei gelichzeitiger Anwendung erhöhten Drucks und erhöhter Temperatur auf die angegebene Weise laminiert werden, wenden hier auch als Druck-Temperatur-Laminationskörper bezeichnet.

Ein Klebstoff ist ein Prozesswerkstoff, der zum Kleben verwendet wird. Ein Klebstoff ist ein nichtmetallischer Werkstoff, der Fügeteile durch Flächenhaftung, welche als Adhäsion bezeichnet wird, und innere Festigkeit, welche als Kohäsion bezeichnet wird, verbinden kann.

Ein aushärtbarer Klebstoff ist ein Klebstoff, bei dem zum Ausbilden der Festigkeit eine innere Vernetzung ausgelöst wird. Diese Vernetzung kann auf unterschiedliche Weise erfolgen. Hierzu gehören beispielsweise die Polymerisation, Polyaddition und Polykondensation.

Als Tack wird eine Anfangsklebrigkeit eines Klebstoffs bezeichnet, die die Fähigkeit beschreibt, unmittelbar an einem Fügeteil anzuhaften. Je höher der Tack eines Klebstoffs ist, desto größer ist dessen Neigung, beim Kontakt mit einem Fügeteil an diesem zu haften.

Als transparent wird ein Material angesehen, wenn durch dieses hindurch eine Abbildung gemäß der geometrischen Optik möglich ist. Als transluzent wird ein Material angesehen, welches eine Transmission von Licht zulässt, jedoch das hindurchtretende Licht diffus streut. Als opak wird eine Schicht angesehen, welche einen Lichtdurchtritt nicht zulässt bzw. eine Transmission von weniger als 5 %, bevorzugt weniger als 1 % aufweist.

Eine Substratschicht ist transparent, wenn diese im fertig laminierten Laminationskörper mit einer transparenten Materialschicht korrespondiert.

Ein Klebstoff gilt als transparent, wenn dieser im fertig gefügten Zustand im Laminationskörper transparent ist.

Dasselbe gilt analog für Klebstoffe und Klebstoffschichten. Diese gelten als transparent, wenn sie im zusammengefügten und gegebenenfalls ausgehärteten Zustand, d. h. im fertigen Laminationskörper transparent sind.

### Bevorzugte Ausführungsformen

Es wird ein Verfahren zum Herstellen eines Laminationskörpers mit einem integrierten Belichtungshologramm geschaffen, welches die Schritte umfasst: Bereitstellen mehrerer Substratschichten; Übereinanderschichten der mehreren Substratschichten zu einem Substratschichtenstapel; Bereitstellen einer Belichtungshologrammschicht; und Ausführen eines Druck-Temperatur-Laminationsschrittes zum Zusammenfügen der mehreren Substratschichten zu dem, auch als Datenkörper bezeichneten, Laminationskörper ; wobei die Belichtungshologrammschicht so zwischen zwei der mehreren Substratschichten vor dem Laminationsschritt angeordnet wird, dass die zwei der mehreren Substratschichten beim Laminationsschritt vollständig umlaufend um die Belichtungshologrammschicht flächig miteinander zusammengefügt werden, wobei die Belichtungshologrammschicht mittels eines Klebstoffs zumindest mit einer der zwei der mehreren Substratschichten verbunden wird.

Erfindungsgemäß ist vorgesehen, dass die Belichtungshologrammschicht mittels eines Abroll- und/oder Walzprozesses auf der einen der zwei Substratschichten appliziert wird. Hierdurch können Lufteinschlüsse zwischen dem Klebstoff und der einen der zwei Substratschichten bzw. dem Klebstoff und der Belichtungshologrammschicht vermieden werden. Außerdem kann ein ausreichender Druck ausgeübt werden, um mittels eines Tacks des Klebstoffs eine Fixierung von der Belichtungshologrammschicht an der einen der zwei der mehreren Substratschichten zu erreichen.

Insbesondere wird gemäß dem beanspruchten Verfahren ein Laminationskörper mit integriertem Belichtungshologramm geschaffen, welcher umfasst: mehrere Materialschichten, die aus mit den Materialschichten korrespondierenden Substratschichten in einem Druck-Temperatur-Laminationsverfahren zu dem Laminationskörper zusammengefügt sind, wobei zwischen zwei der Materialschichten eine Belichtungshologrammschicht integriert ist, die zumindest an einer Außenfläche mittels eines Klebstoffs mit einer der zwei Materialschichten verbunden ist, wobei vollständig umlaufend um die Belichtungshologrammschicht die zwei Materialschichten unmittelbar flächig mittels der Laminierung zusammengefügt sind.

Um einen besonders kompakten und auch bei Durchbiegung stabilen nicht zur Delamination neigenden Laminationskörper zu bilden, ist bei einer bevorzugten Ausführungsform vorgesehen, dass der Klebstoff die zumindest eine Außenfläche der Belichtungshologrammschicht vollflächig bedeckt.

Vorzugsweise ist der Klebstoff transparent ausgebildet, um einen Durchblick durch die Belichtungshologrammschicht und die darunter befindliche eine der beiden Materialschichten nicht zu behindern bzw. Markierungen auf dieser oder in dieser einen der beiden Materialschichten durch den Klebstoff hindurch nicht zu behindern. Ist der Klebstoff zwischen der Belichtungshologrammschicht und einer Außenseite des Laminationskörpers angeordnet, durch welche hindurch die Rekonstruktion des gespeicherten Hologramms stattfindet, so ist der Klebstoff für zumindest die Wellenlänge transparent, dessen Licht das Hologramm rekonstruiert.

Um die Kompaktheit und die Delaminationsneigung im Bereich der Belichtungshologrammschicht weiter zu reduzieren, ist bei einer besonders bevorzugen Ausführungsform vorgesehen, dass der Klebstoff ein gehärteter Klebstoff ist. Dies bedeutet, dass der Klebstoff nach dem bzw. während des Fügeschrittes einen Vernetzungsprozess ausführt.

Bei einigen Ausführungsformen ist vorgesehen, dass der Klebstoff ausgehärtet wird.

Bei einer Ausführungsform des Verfahrens ist vorgesehen, dass der Klebstoff vollflächig auf eine der Außenflächen der Belichtungshologrammschicht, insbesondere als Klebstoffschicht, aufgebracht wird und anschließend vor dem oder bei dem Übereinanderschichten der Substratschichten auf die eine der zwei der mehreren Substratschichten appliziert wird, sodass umlaufend um die applizierte Belichtungshologrammschicht ein flächiger Bereich der einen der zwei der mehreren Substratschichten nicht von der Belichtungshologrammschicht bedeckt wird und der Klebstoff zwischen der einen Außenfläche der Belichtungshologrammschicht und der einen der zwei der mehreren Substratschichten angeordnet wird. Das Applizieren der Belichtungshologrammschicht, welche flächig kleiner ist als die Fläche eines fertigen Laminationskörpers, kann somit auf eine der Substratschichten appliziert werden, bevor die Substratschichten zu dem Substratschichtenstapel zusammengetragen werden.

Vorzugsweise weist der Klebstoff bei einigen Ausführungsformen einen Tack auf und wird die Belichtungshologrammschicht beim Applizieren auf der einen der zwei der mehreren Substratschichten mittels des Tacks fixiert. Dieser Fixierung reicht aus, dass die Belichtungshologrammschicht relativ zu der einen der zwei der mehreren Substratschichten ihre Position auch beim Zusammentragen mit den anderen der mehreren Substratschichten zum Substratschichtenstapel behält.

Der Klebstoff ist vorzugsweise so ausgeführt, dass er zusätzlich ausgehärtet wird, welches besonders bevorzugt zeitgleich durch die eingetragene Wärme beim Druck-Temperatur-Laminationsschritt in den Substratschichtenstapel ausgelöst wird.

Bei anderen Ausführungsformen kann vorgesehen sein, dass das Vernetzen des Klebstoffs zwischen der Belichtungshologrammschicht und eines der zwei der mehreren Substratschichten vor dem Zusammentragen oder zumindest vor dem Laminationsschritt ausgeführt wird.

Bei einer Variante ist vorgesehen, dass in dem Laminationskörper bzw. der Datenkarte der Klebstoff nach der Applikation auf die Belichtungshologrammschicht oder bei der Lamination durchgehärtet ist.

Bei einer alternativen Variante ist vorgesehen, dass in dem Laminationskörper bzw. der Datenkarte der Klebstoff in bereits vernetzter Form beim Applizieren auf die Belichtungshologrammschicht physikalisch verbunden ist.

Besonders bevorzugt wird die Belichtungshologrammschicht beidseitig über einen Klebstoff oder über zwei Klebstoffe sowohl mit der einen als auch mit der anderen der zwei umlaufend um die Belichtungshologrammschicht unmittelbar aufeinander laminierten Substratschichten bzw. Materialschichten verbunden. Von daher ist bei einer Ausführungsform vorgesehen, dass zusätzlich zu der einen Außenfläche der Belichtungshologrammschicht eine gegenüberliegende Außenfläche der Belichtungshologrammschicht mit dem gleichen Klebstoff oder einem weiteren Klebstoff versehen wird, sodass die eine Außenfläche der Belichtungshologrammschicht mittels des Klebstoffs mit der einen der zwei der mehreren Substratschichten verbunden wird und die gegenüberliegende Außenfläche der Belichtungshologrammschicht mit der anderen der zwei Hologrammschichten mittels des Klebstoffs oder des weiteren Klebstoffs verbunden wird. Besonders bevorzugt wird somit die eine Außenfläche wie auch die gegenüberliegende Außenfläche jeweils mit einer Klebstoffschicht, welche jeweils beispielsweise als Klebstofffolien ausgebildet sind und mit der Belichtungshologrammschicht zu einem Folienverbund verbunden sein können, versehen. Hierbei kann der Klebstoff, welcher an der einen Außenfläche der Belichtungshologrammschicht aufgebracht ist, einen Tack aufweisen, um das Belichtungshologramm vor dem Zusammentragen der Substratschichten zu dem Substratschichtenstapel auf dieser mittels des Tacks zu fixieren. Die an der gegenüberliegenden Außenfläche ausgebildete Klebstoffschicht bzw. der dort angebrachte Klebstoff oder der weitere Klebstoff ist vorzugsweise so ausgebildet, dass dieser keinen Tack aufweist, sodass ein Zusammentragen der Substratschichten und ein relatives Ausrichten der Substratschichten im Substratschichtenstapel nicht behindert wird. Der Klebstoff auf der einen Außenfläche sowie der Klebstoff auf der gegenüberliegenden Außenfläche sind jedoch vorzugsweise als aushärtbare Klebstoffe ausgebildet. Besonders bevorzugt werden diese beide während des Laminierens durch die dazu erforderliche Temperatur ausgehärtet.

Vorzugsweise wird der Klebstoff auf die Belichtungshologrammschicht aufgebracht und diese gemeinsam mit dem Klebstoff bzw. der Klebstoffschicht auf eine der zwei der mehreren Substratschichten appliziert. Es sind jedoch auch Ausführungsformen möglich, bei denen der Klebstoff zuerst auf einer der zwei der mehreren Substratschichten in jenem Bereich aufgebracht wird, in dem die Belichtungshologrammschicht appliziert wird. In jedem Fall verbleiben jedoch die Bereiche der einen Substratschicht als auch der anderen Substratschicht der mehreren Substratschichten umlaufend um die zwischen den zwei der mehreren Substratschichten applizierte Belichtungshologrammschicht klebstofffrei, sodass das Material, aus dem die eine und die andere der Substratschichten gebildet sind, beim Druck-Temperatur-Laminationsverfahren unmittelbar miteinander stoffschlüssig verbunden werden. Besonders bevorzugt sind die zwei Materialschichten, zwischen denen die Belichtungshologrammschicht angeordnet ist oder wird, aus demselben Kunststoffmaterial hergestellt. Besonders bevorzugt sind die Substratschichten aus Polycarbonat. Möglich ist es jedoch, auch andere Kunststoffmaterialien, wie sie in Laminationskörpern für Sicherheitsdokumente verwendet werden, zu nutzen. Diese umfassen beispielsweise PET, PET- G, ABS, PVC und Verbundmaterialien. Besonders bevorzugt sind jedoch alle Substratschichten, die zu dem Laminationskörper zusammengefügt sind, auf Basis desselben Kunststoffs hergestellt, vorzugsweise alles Polycarbonatsubstratschichten. Hierdurch erhält man einen besonders stabilen und haltbaren Laminationskörper, bei dem zwischen den einzelnen Materialschichten, die mit den Substratschichten korrespondieren, aus denen der Laminationskörper im Fügeverfahren zusammengefügt ist, keine Phasenübergänge in der Kunststoffstruktur festzustellen sind. Die einzelnen Materialschichten können nur durch zwischen diesen angeordnete Sicherheitselemente wie die Belichtungshologrammschicht oder andere Sicherheitselemente und/oder Markierungen sowie gegebenenfalls durch Füllstoffe in den verschiedenen ursprünglichen Substratschichten im Laminationskörper unterschieden werden.

Nachfolgend wird die Erfindung unter Bezugnahme auf eine Zeichnung näher erläutert. Hierbei zeigen:
- Fig. 1: eine schematische Explosionszeichnung eines Laminationskörpers;
- Fig. 2: eine Schnittansicht des Laminationskörpers nach Fig. 1;
- Fig. 3: eine schematische Draufsicht auf einen Laminationskörper nach Fig. 1 und Fig. 2;
- Fig. 4: eine weitere schematische Explosionsansicht eines Laminationskörpers;
- Fig. 5: eine schematische Schnittansicht des Laminationskörpers nach Fig. 4;
- Fig. 6: eine schematische Draufsicht auf den Laminationskörper nach Fig. 4 und Fig. 5;
- Fig. 7-9: schematische Darstellungen für das Applizieren der Belichtungshologrammschicht auf eine der Substratschichten mittels eines Walzverfahrens.

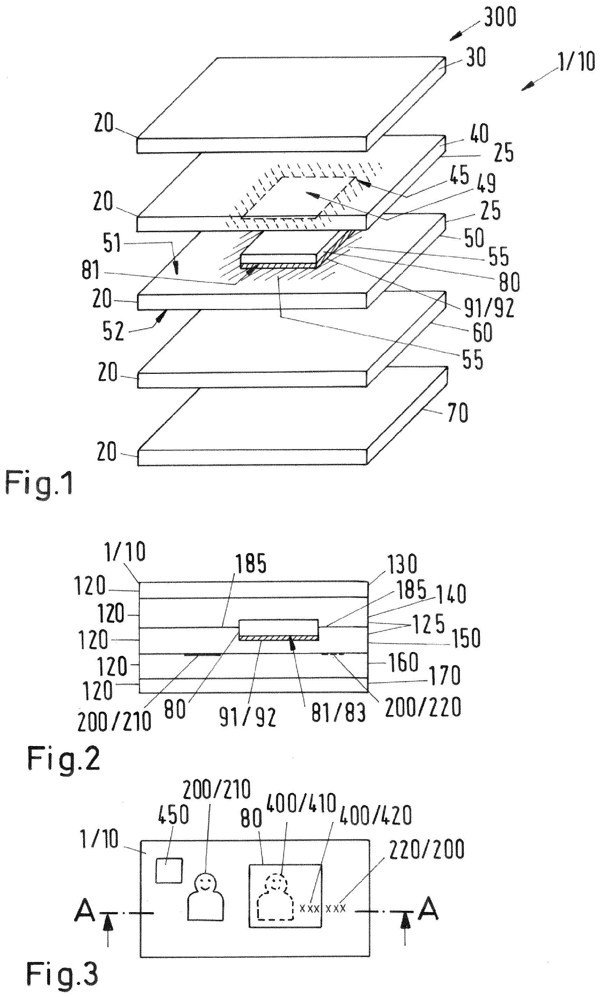

In Fig. 1 ist schematisch eine Explosionszeichnung eines Substratschichtenstapels dargestellt, aus dem ein Laminationskörper 10 für ein Sicherheitsdokument 1, wie es in Fig. 2 in der Schnittzeichnung schematisch dargestellt ist und in Fig. 3 als Draufsicht dargestellt ist, erzeugbar ist.

In dem Substratschichtenstapel 300 sind mehrere Substratschichten 20 flächig übereinandergeschichtet. In der dargestellten Ausführungsform ist eine Belichtungshologrammschicht 80 zwischen zwei der Substratschichten 25 angeordnet. Bei der dargestellten Ausführungsform ist die Belichtungshologrammschicht 80 auf einer Substratschicht 50 der zwei der Substratschichten 25, der mehreren Substratschichten 20, welche unmittelbar flächig umlaufend um die Belichtungshologrammschicht 80 miteinander zusammengefügt werden. Dies bedeutet, dass die Belichtungshologrammschicht 80 auf der einen Substratschicht 50 der zwei Substratschichten 25 mittels eines Klebstoffs 91 fixiert ist. Hierbei ist die Belichtungshologrammschicht 80 so auf der einen Substratschicht 50 der zwei der Substratschichten 25 angeordnet, dass umlaufend um die Belichtungshologrammschicht 80 jeweils ein flächiger freier Bereich 55, der hier schraffiert dargestellt ist, frei ist, d.h. weder von der Belichtungshologrammschicht 80 noch von dem Klebstoff 91 bedeckt ist. Entsprechend weist auch eine andere Substratschicht 40 der zwei Substratschichten 25 an deren Unterseite 42 umlaufend um eine Kontaktfläche 49 mit der Belichtungshologrammschicht 80 einen unbedeckten Bereich 45 auf, der bei einem Laminationsschritt in Kontakt mit dem nicht bedeckten freien Bereich 55 auf der Oberseite 51 der einen Substratschicht 50 gelangt. Hierdurch wird in dem Laminationsschritt umlaufend um die Belichtungshologrammschicht 80 Material der einen Substratschicht 50 mit Material der anderen Substratschicht 40, zwischen denen die Belichtungshologrammschicht 80 angeordnet ist, zusammengefügt.

In dem Substratschichtenstapel 300 ist über der anderen Substratschicht 40 eine weitere Substratschicht 30, welche als Deck- und Schutzschicht in dem fertigen Laminationskörper 10 dient, angeordnet. Zumindest die andere Substratschicht 40 und die weitere Substratschicht 30 sind transparent für jene Wellenlänge ausgebildet, die mit der Wellenlänge des Rekonstruktionslichts korrespondiert, mit der das gespeicherte Hologramm in der Belichtungshologrammschicht 80 rekonstruiert werden kann, sofern es sich bei dem in der Belichtungshologrammschicht 80 gespeicherten Hologramm um ein Volumenreflexionshologramm handelt. Unter der einen Substratschicht 50 sind eine zusätzliche Substratschicht 60 und noch eine weitere Substratschicht 70, die ebenfalls als Abdeck- und Schutzschicht in dem fertigen Laminationskörper 70 dient, angeordnet.

Ist das in der Belichtungshologrammschicht 80 gespeicherte Hologramm ein Transmissionshologramm, so sind auch die eine Substratschicht 50, die zusätzliche Substratschicht 60 und die noch eine weitere Substratschicht 70 ebenfalls wie die andere Substratschicht 40 und die weitere Substratschicht 30 zumindest für die Wellenlänge des Lichts transparent, mit der das gespeicherte Hologramm der Belichtungshologrammschicht 80 rekonstruierbar ist. Der Klebstoff 91, der zwischen der Belichtungshologrammschicht 80 und der einen Substratschicht 50 der zwei Substratschichten 25 angeordnet ist, ist vorzugsweise vollflächig auf eine Außenfläche 81, welche in der Darstellung die untere Oberfläche 83 der Belichtungshologrammschicht 80 ist, aufgebracht. Vorzugsweise ist der Klebstoff als Klebstoffschicht 92 ausgebildet.

Der Klebstoff 91 ist vorzugsweise ein aushärtbarer Klebstoff, der jedoch beim Applizieren der Belichtungshologrammschicht 80 auf der einen Substratschicht 50, welches vorzugsweise vor dem Zusammentragen der Substratschichten 20 zu dem Substratschichtenstapel 300 erfolgt, an der der einen Substratschicht 50 zugewandten Seite einen ausreichenden Tack aufweist, dass die Belichtungshologrammschicht 80 auf der einen Substratschicht 50 fixiert werden kann. Das Aushärten des Klebstoffs 91 der Klebstoffschicht 92 erfolgt vorzugsweise während des Druck-Temperatur-Laminationsverfahrens über die in den Substratschichtenstapel 300 eingetragene Wärmeenergie.

Andere Ausführungsformen können vorsehen, dass das Vernetzen und Aushärten des Klebstoffs 91 in der Klebstoffschicht 92 mittels UV-Strahlung ausgelöst oder bewirkt wird. Dieses kann ebenfalls während der Lamination oder bereits vorher erfolgen. Auch eine wärmeausgelöste Härtung des Klebstoffs 91 kann bereits vor dem Zusammentragen der einen Substratschicht 50 mit den übrigen der Substratschichten 20 zu dem Substratschichtenstapel 300 erfolgen.

In Fig. 2 ist eine schematische Schnittansicht durch den Laminationskörper 10 eines Sicherheitsdokuments 1, entlang einer Schnittlinie A-A, wie in Fig. 3 dargestellt, gezeigt. In dem Laminationskörper 10 korrespondieren mit den mehreren Substratschichten 20 des Substratschichtenstapels 300 Materialschichten 120. Die Belichtungshologrammschicht 80 ist somit zwischen zwei Materialschichten 125, d.h. zwischen einer Materialschicht 150 und einer anderen der zwei Materialschichten 125, nämlich der Materialschicht 140, in dem Laminationskörper 10 eingeschlossen. Umlaufend ist die Belichtungshologrammschicht 80 somit von einer Fügeverbindung umgeben, an der die eine Materialschicht 150 unmittelbar und direkt mit der anderen Materialschicht 140 der zwei Materialschichten 125 in dem Laminationskörper 10 miteinander verbunden ist. Zusätzlich ist die Belichtungshologrammschicht 80 über den Klebstoff 91 der Klebstoffschicht 92 mit der einen Materialschicht 150 flächig fest verbunden. Auch beim Durchbiegen des Laminationskörpers 10 existiert somit keine Delaminationsneigung im Bereich der Belichtungshologrammschicht 80. Auch die übrigen Materialschichten 120 korrespondieren entsprechend mit einer der Substratschichten 20. So korrespondiert die weitere Materialschicht 130, die als Abdeckschicht dient, mit der weiteren Substratschicht 30. Die zusätzliche Materialschicht 160 korrespondiert entsprechend mit der zusätzlichen Substratschicht 60 und die noch eine weitere Materialschicht 170 entsprechend mit der noch einen weiteren Substratschicht 70.

Fig. 2 zeigt eine Schnittansicht des in Fig. 3 in Draufsicht dargestellten Laminationskörpers 10 des Sicherheitsdokuments 1 entlang einer Schnittlinie A-A, die in Fig. 3 eingezeichnet ist. In der Schnittansicht der Fig. 2 sind schematisch Individualisierungsdrucke 200, die ein bedrucktes Portraitbild 210 und eine Seriennummer 220 umfassen, schematisch angedeutet. Diese sind vorzugsweise auf einer Unterseite 52 der einen Substratschicht 50 aufgedruckt. Hierdurch ist eine präzise Ausrichtung und Platzierung der Belichtungshologrammschicht 80 relativ zu diesen Individualisierungsdrucken 200 bei Applizieren der Belichtungshologrammschicht 80 auf der einen Substratschicht 50 möglich.

Bei anderen Ausführungsformen können die Individualisierungsdrucke auf andere Substratschichtoberflächen, auch auf verschiedene Substratschichtoberflächen, gedruckt sein. Vorzugsweise werden die Individualisierungsdrucke nur auf solche Substratschichtoberflächen ausgeführt, die im Sicherheitsdokument innenliegend sind, d.h. die beim Laminieren einer andern der Substratschichtoberflächen zugewandt sind. Hierdurch sind die Individualisierungsdrucke besser vor Manipulationen geschützt.

Wie aus der Draufsicht auf den Laminationskörper 10 des Sicherheitsdokuments 1, der in Fig. 3 schematisch dargestellt ist, zu erkennen ist, überlappt die Belichtungshologrammschicht 80 den Individualisierungsdruck 200 der Seriennummer 220. Somit ist es beispielsweise möglich, einen Teil der Seriennummer 220 in der holografisch gespeicherten Information 400 als teilgedoppelte Seriennummer 420 so ausgerichtet relativ zu der gedruckten Seriennummer 220 auszubilden, dass diese bei der Rekonstruktion ausgerichtet zu der gedruckten Seriennummer einen Teil dieser Seriennummer wiedergibt. Bei anderen Ausführungsformen kann die teilgedoppelte Seriennummer 420 so über der gedruckten Seriennummer 220 angeordnet sein, dass die teilgedoppelte Seriennummer 420 bei der Rekonstruktion deckungsgleich mit der gedruckten Seriennummer 220 erfassbar ist.

Zusätzlich zu der teilgedoppelten Seriennummer 420 enthält die holografische Information in der dargestellten Ausführungsform auch noch ein holografisches Portraitbild 410, welches das gedruckte Portraitbild 320 als holografische Information repliziert.

Das Sicherheitsdokument 1 kann in dem Laminationskörper 10 auch noch weitere Sicherheitselemente wie beispielsweise einen Chip oder Ähnliches enthalten. In der dargestellten Ausführungsform sind die eine Materialschicht 150, die andere Materialschicht 140 und die weitere Materialschicht 30 sowie die Belichtungshologrammschicht 80 und der Klebstoff 91 in der Klebstoffschicht 92 alle transparent ausgebildet, sodass die Individualisierungsdrucke 200, die zwischen der zusätzlichen Materialschicht 160 und der einen Materialschicht 150 angeordnet sind, erfassbar sind. Die zusätzliche Materialschicht 160 kann transparent, transluzent oder opak ausgebildet sein. Ist das gespeicherte Hologramm ein Transmissionshologramm, so sind alle Materialschichten 120 und die Klebstoffschicht 92 zumindest im Bereich des Hologramms oder der Hologramme transparent. Die noch eine weitere Materialschicht 170 ist in der Regel ebenfalls transparent ausgebildet.

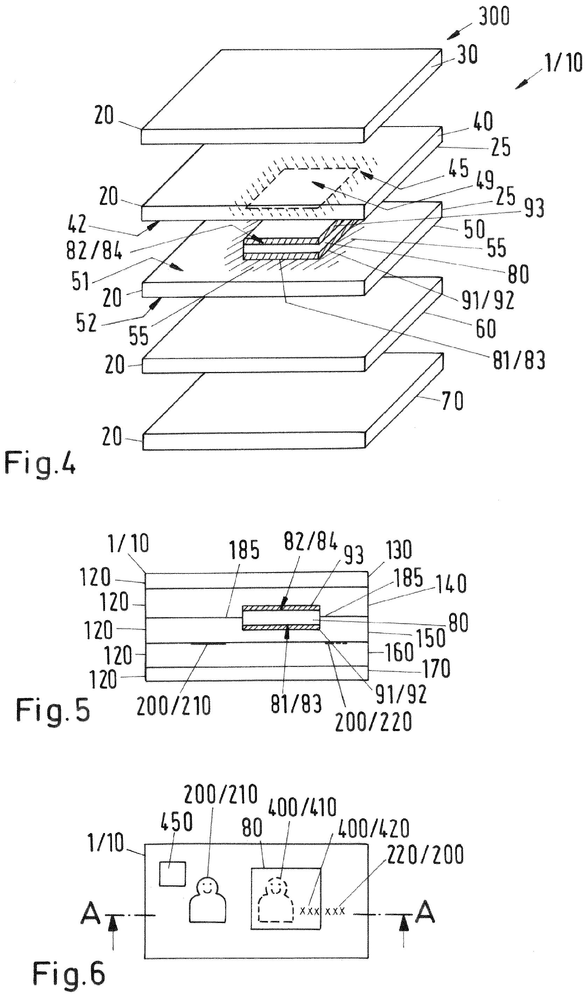

In Fig. 4 bis Fig. 6 sind ein Substratschichtenstapel 300, ein Querschnitt entlang einer Linie A-A durch einen weiteren Laminationskörper 10 eines Sicherheitsdokuments 1 und ein Sicherheitsdokument in Draufsicht entsprechend analog zu Fig. 1 bis Fig. 3 dargestellt. Gleiche technische Merkmale haben in allen Figuren dieselben Bezugszeichen. Diese Ausführungsform unterscheidet sich dadurch, dass auf einer der einen Außenfläche 81 der Belichtungshologrammschicht 80 gegenüberliegenden Außenfläche 82, welches hier die Oberseite 84 ist, ebenfalls eine weitere Klebstoffschicht 93 vollflächig aufgebracht ist, sodass die Belichtungshologrammschicht 80 sowohl mit der einen Materialschicht 150 über die Klebstoffschicht 92 als auch mit der anderen Materialschicht 140 über die weitere Klebstoffschicht 93 jeweils flächig verbunden ist. Hierdurch wird die Stabilität des Laminationskörpers 10 insbesondere gegenüber Delaminationsneigungen bei Biegungen des Dokumentkörpers 1 weiter gesteigert. Sowohl die Klebstoffschicht 92 als auch die weitere Klebstoffschicht 93 sind im fertig laminierten Zustand transparent und behindern eine Rekonstruktion der holografischen Information 400 in der Belichtungshologrammschicht 80 nicht. Die Klebstoffschicht 92 und die weitere Klebstoffschicht 93 können dasselbe Klebstoffmaterial als auch unterschiedliches Klebstoffmaterial aufweisen. Bevorzugt wird dasselbe Klebstoffmaterial verwendet. In jedem Fall sind die verwendeten Klebstoffmaterialien bevorzugt aushärtbar.

Das Aushärten erfolgt besonders bevorzugt während des Laminierens durch die hierbei herbeigeführte erforderliche erhöhte Temperatur. Hierbei wird eine Laminierung der Substratschichten 20 des Substratschichtenstapels 300 durchgeführt, um den Laminationskörper 10 auszubilden.

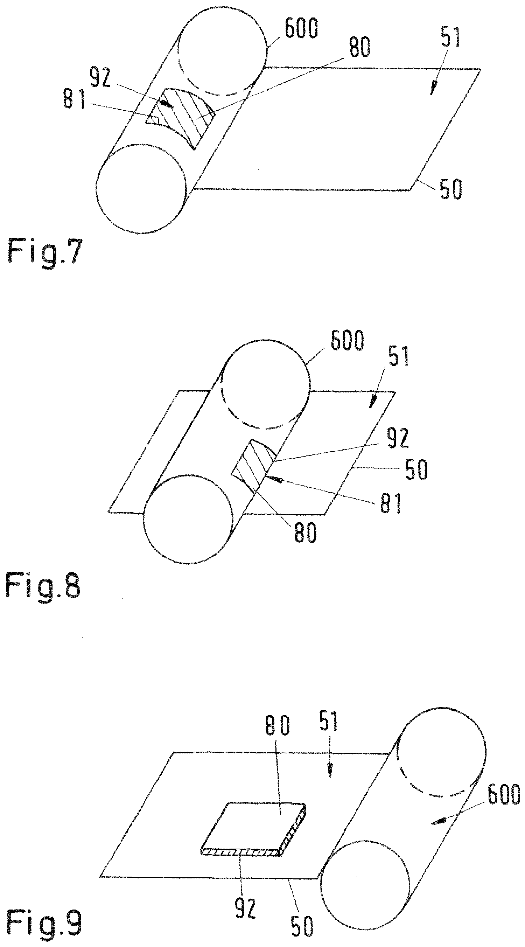

In Fig. 7 bis Fig. 9 ist schematisch das Aufbringen der Belichtungshologrammschicht 80 auf die eine Substratschicht 50 vor dem Zusammentragen zu dem Substratschichtenstapel 300 exemplarisch mittels eines Walzenprozesses dargestellt. Auf einer Walze 600 wird die Belichtungshologrammschicht 80 appliziert. Diese ist zumindest an einer Außenfläche 81 vollflächig mit einer Klebstoffschicht 92 beschichtet. Diese eine Außenfläche 81 ist von einer Walze 600 abgewandt. Die Belichtungshologrammschicht 80 haftet auf der Walze 600 beispielsweise dadurch, dass die Walze 600 selbst eine Oberfläche mit einem Tack aufweist, der ausreicht, dass die Belichtungshologrammschicht 80 auf der Walze 600 haftet. Die Klebstoffschicht 92 auf der einen Außenfläche 81 der Belichtungshologrammschicht 80 weist vorzugsweise einen größeren Tack auf, sodass beim Abrollen der Walze 600 über die eine Substratschicht 50 eine Applizierung und Fixierung der Belichtungshologrammschicht 80 auf der einen Substratschicht 50 erfolgt. Da der Tack der Klebstoffschicht 92 größer als der Tack der Walze 600 ist, bleibt die Belichtungshologrammschicht 80 an der einen Substratschicht 50 haften, während die Walze 600 über die eine Substratschicht 50 abgerollt wird.

Bei anderen Ausführungsformen (nicht dargestellt) kann die Anhaftung der Belichtungshologrammschicht an der Walze auch über die weitere Klebstoffschicht erreicht werden, die auf der der einen Außenfläche gegenüberliegenden Außenfläche, welche der Walze zugewandt ist, vollflächig aufgebracht ist. Bei diesen Ausführungsformen ist der Tack der weiteren Klebstoffschicht vorzugsweise geringer als der Tack der einen Klebstoffschicht, welche in Kontakt mit der einen Substratschicht beim Abrollen der Walze gelangt. Dies kann beispielsweise dadurch erreicht werden, dass in die eine Klebstoffschicht unmittelbar vor dem Inkontaktbringen mit der einen Substratschicht Wärme, beispielsweise in Form von Infrarotstrahlung, die Belichtungshologrammschicht bzw. die eine Klebstoffschicht bestrahlt wird und hierdurch der Tack der Klebstoffschicht gegenüber der weiteren Klebstoffschicht erhöht wird, sodass beim Abrollen der Walze die Belichtungshologrammschicht an der einen Substratschicht anhaftet und die weitere Klebstoffschicht sich von der Walze löst.

Ein Auftragen per Walze ist vorteilhaft, um Lufteinschlüsse zu vermeiden und eine korrekte Positionierung beispielsweise relativ zu Individualisierungsdrucken oder anderen Bedruckungen, welche auf der Oberseite 51 der Substratschicht, auf die die Belichtungshologrammschicht 80 aufgebracht wird, oder auch auf die Unterseite 52 der Substratschicht 50 aufgedruckt sind, zu erreichen.

Es gibt auch viele weitere Möglichkeiten, die Belichtungshologrammschicht zwischen der einen Substratschicht 30 und der anderen Substratschicht 40 zu platzieren. Vorteilhaft ist es, wenn die Belichtungshologrammschicht an der der einen Außenfläche 81 gegenüberliegenden Außenfläche 82, nachdem die Belichtungshologrammschicht auf die eine Substratschicht platziert ist, möglichst einen geringen oder gar keinen Tack aufweist. Hierdurch wird beim Zusammentragen der Substratschichten 20 eine Ausrichtung der Substratschichten durch die weitere Klebstoffschicht 93, die dann der anderen Substratschicht 40 zugewandt ist, nicht behindert.

Das Anhaften der Belichtungshologrammschicht 80 an der Walze 600 über die weitere Klebstoffschicht 93 kann beispielweise dadurch erreicht werden, dass die Walze leicht vorgewärmt wird. Hierdurch wird der Tack des Klebstoffs der weiteren Klebstoffschicht aufgrund der Erwärmung leicht erhöht. Nachdem die Belichtungshologrammschicht auf der einen Substratschicht 50 appliziert ist und die weitere Klebstoffschicht 93 wieder abgekühlt ist, weist diese vorzugsweise keinen oder einen sehr geringen Tack auf. Beim Laminationsschritt wird dann die Verbindung zwischen der Belichtungshologrammschicht und der anderen der Substratschichten zum einen darüber hergestellt, dass beim Erwärmen der Tack erneut ausgebildet wird, insbesondere aber darüber, dass die weitere Klebstoffschicht während des Laminationsverfahrens ausgehärtet wird, d.h. eine Vernetzung in dem Klebstoff stattfindet.

Es versteht sich für den Fachmann, dass hier bloß beispielhafte Ausführungsformen beschrieben sind. Insbesondere eine Anzahl der Materialschichten im Laminationskörper bzw. der Substratschichten im Substratschichtenstapel kann von der hier gezeigten Anzahl abweichen. Notwendig ist lediglich, dass die Belichtungshologrammschicht zwischen zwei Materialschichten, die vorzugsweise aus demselben Kunststoffmaterial hergestellt sind, so angeordnet wird, dass diese beiden Materialschichten umlaufend um die Belichtungshologrammschicht beim Laminationsschritt direkt unmittelbar miteinander zusammengefügt werden.

### Bezugszeichenliste

- 1: Sicherheitsdokument
- 10: Laminationskörper
- 20: Substratschichten
- 25: zwei Substratschichten
- 30: weitere Substratschicht
- 40: andere der zwei Substratschichten
- 42: Unterseite
- 45: (umlaufender) unbedeckter Bereich
- 49: Kontaktfläche
- 50: eine der zwei Substratschichten
- 51: Oberseite
- 52: Unterseite
- 55: (umlaufender) freier Bereich
- 60: zusätzliche Substratschicht
- 70: noch eine weitere Substratschicht
- 80: Belichtungshologrammschicht
- 81: eine Außenfläche
- 82: gegenüberliegende Außenfläche
- 83: untere Oberfläche
- 84: obere Oberfläche
- 91: Klebstoff
- 92: Klebstoffschicht
- 93: weitere Klebstoffschicht
- 120: Materialschichten
- 125: zwei Materialschichten
- 130: weitere Materialschicht
- 140: eine andere Materialschicht
- 150: eine Materialschicht
- 160: zusätzliche Materialschicht
- 170: noch eine weitere Materialschicht
- 185: Fügeverbindung
- 200: Individualisierungsdrucke
- 210: gedrucktes Portraitbild
- 220: Seriennummer
- 250: weiteres Sicherheitselement
- 300: Substratschichtenstapel
- 400: holografische Information
- 410: holografisches Portraitbild
- 420: teilgedoppelte Seriennummer
- 450: weitere Sicherheitselemente
- 600: Walze

## Patentansprüche

1. Verfahren zum Herstellen eines Laminationskörpers (10) mit einem integrierten Belichtungshologramm umfassend die Schritte (20):
Bereitstellen mehrerer Substratschichten;
Übereinanderschichten der mehreren Substratschichten (20) zu einem Substratschichtenstapel (300);
Bereitstellen einer Belichtungshologrammschicht (80); und
Ausführen eines Druck-Temperatur-Laminationsschrittes zum Zusammenfügen der mehreren Substratschichten (20) zu dem Laminationskörper (10);
wobei
die Belichtungshologrammschicht (80) so zwischen zwei Substratschichten (25) der mehreren Substratschichten (20) vor dem Laminationsschritt angeordnet wird, dass die zwei Substratschichten (25) der mehreren Substratschichten (20) beim Laminationsschritt vollständig umlaufend um die Belichtungshologrammschicht (80) flächig unmittelbar miteinander zusammengefügt werden, wobei die Belichtungshologrammschicht (80) mittels eines Klebstoffs (91) zumindest mit einer Substratschicht (20) der zwei Substratschichten (25) der mehren Substratschichten (20) verbunden wird, wobei die Belichtungshologrammschicht (80) das integrierte Belichtungshologramm umfasst, welches in ein fotoempfindliches Material der Belichtungshologrammschicht (80) belichtet ist und im Innern des fotoempfindlichen Materials gespeichert ist, **dadurch gekennzeichnet, dass** die Belichtungshologrammschicht (80) mittels eines Abroll- und/oder Walzprozesses auf der einen Substratschicht (50) der zwei Substratschichten (25) appliziert wird.

2. Verfahren nach Anspruch 1, **dadurch gekennzeichnet, dass** der Klebstoff (91) vollflächig auf eine Außenfläche (81) der Belichtungshologrammschicht (80) aufgebracht wird und anschließend, vor dem oder bei dem Übereinanderschichten der Substratschichten (20) auf die eine Substratschicht (50) der zwei Substratschichten (25) der mehreren Substratschichten (20) appliziert wird, sodass umlaufend um die applizierte Belichtungshologrammschicht (80) ein flächiger Bereich (55) der einen der zwei Substratschichten (25) der mehreren Substratschichten (20) nicht von der Belichtungshologrammschicht (80) bedeckt wird und der Klebstoff (91) zwischen der einen Außenfläche (81) der Belichtungshologrammschicht (80) und der einen Substratschicht (50) der zwei Substratschichten (25) der mehreren Substratschichten angeordnet wird.

3. Verfahren nach Anspruch 1 oder 2, **dadurch gekennzeichnet, dass** der Klebstoff (91) ausgehärtet wird.

4. Verfahren nach einem der Ansprüche 1 bis 3, **dadurch gekennzeichnet, dass** der Klebstoff (91) einen Tack aufweist und die Belichtungshologrammschicht (80) beim Applizieren auf der einen Substratschicht (50) der zwei Substratschichten (25) der mehreren Substratschichten (20) mittels des Tacks fixiert wird.

5. Verfahren nach einem der Ansprüche 1 bis 4 **dadurch gekennzeichnet, dass** zusätzlich zu der einen Außenfläche (81) der Belichtungshologrammschicht (80) eine gegenüberliegende Außenfläche (82) der Belichtungshologrammschicht (80) mit dem gleichen Klebstoff (91) oder einem weiteren Klebstoff versehen wird, so dass die eine Außenfläche (81) der Belichtungshologrammschicht (80) mittels des Klebstoffs (91) mit der einen Substratschicht (50) der zwei Substratschichten (25) verbunden wird und die gegenüberliegende Außenfläche (82) der Belichtungshologrammschicht (80) mit der anderen Substratschicht (40) der zwei Hologrammschichten (20) mittels des Klebstoffs (91) oder des weiteren Klebstoffs verbunden wird.

## Claims

1. A method of manufacturing a lamination body (10) having an integrated exposure hologram comprising the steps of (20):
providing a plurality of substrate layers;
superposing the plurality of substrate layers (20) to form a substrate layer stack (300); providing an exposure hologram layer (80); and
performing a pressure-temperature lamination step to join the plurality of substrate layers (20) together to form the lamination body (10);
wherein the exposure hologram layer (80) is disposed between two substrate layers (25) of the plurality of substrate layers (20) prior to the laminating step such that the two substrate layers (25) of the plurality of substrate layers (20) are directly bonded to each other in a completely circumferential manner around the exposure hologram layer (80) in the laminating step, wherein the exposure hologram layer (80) is bonded to at least one substrate layer (20) of the two substrate layers (25) of the plurality of substrate layers (20) by means of an adhesive (91), wherein the exposure hologram layer (80) comprises the integrated exposure hologram which is exposed into a photosensitive material of the exposure hologram layer (80) and stored inside the photosensitive material, **characterized in that** the exposure hologram layer (80) is applied to the one substrate layer (50) of the two substrate layers (25) by means of a winding and/or rolling process.

2. Method according to claim 1, **characterized in that** the adhesive (91) is applied over the entire surface of an outer surface (81) of the exposure hologram layer (80) and is then applied to the one substrate layer (50) of the two substrate layers (25) of the plurality of substrate layers (20) before or during the superposition of the substrate layers (20), so that a planar region (55) of one of the two substrate layers (25) of the plurality of substrate layers (20) around the applied exposure hologram layer (80) is not covered by the exposure hologram layer (80) and the adhesive (91) is arranged between the one outer surface (81) of the exposure hologram layer (80) and the one substrate layer (50) of the two substrate layers (25) of the plurality of substrate layers.

3. Process according to claim 1 or 2, **characterized in that** the adhesive (91) is cured.

4. Method according to any one of claims 1 to 3, **characterized in that** the adhesive (91) comprises a tack and the exposure hologram layer (80) is fixed on the one substrate layer (50) of the two substrate layers (25) of the plurality of substrate layers (20) by means of the tack during application.

5. Method according to one of claims 1 to 4, **characterized in that** in addition to the one outer surface (81) of the exposure hologram layer (80), an opposite outer surface (82) of the exposure hologram layer (80) is provided with the same adhesive (91) or a further adhesive, so that the one outer surface (81) of the exposure hologram layer (80) is bonded by means of the adhesive (91) to the one substrate layer (50) of the two substrate layers (25) and the opposite outer surface (82) of the exposure hologram layer (80) is bonded to the other substrate layer (40) of the two hologram layers (20) by means of the adhesive (91) or the further adhesive.

## Revendications

1. Procédé de fabrication d'un corps stratifié (10) avec un hologramme d'exposition intégré, comprenant les étapes (20): fournir une pluralité de couches de substrat ; superposer la pluralité de couches de substrat (20) en un empilement de couches de substrat (300);
fournir une couche d'hologramme d'exposition (80); et
effectuer une étape de stratification par pression et température pour assembler la pluralité de couches de substrat (20) en le corps stratifié (10);
la couche d'hologramme d'exposition (80) étant disposée entre deux couches de substrat (25) de la pluralité de couches de substrat (20) avant l'étape de stratification de telle sorte que, lors de l'étape de stratification, les deux couches de substrat (25) de la pluralité de couches de substrat (20) sont directement assemblées à plat l'une à l'autre en faisant complètement le tour de la couche d'hologramme d'exposition (80), la couche d'hologramme d'exposition (80) étant liée au moyen d'un adhésif (91) à au moins une couche de substrat (20) des deux couches de substrat (25) de la pluralité de couches de substrat (20), la couche d'hologramme d'exposition (80) comprenant l'hologramme d'exposition intégré qui est exposé dans un matériau photosensible de la couche d'hologramme d'exposition (80) et est stocké à l'intérieur du matériau photosensible, **caractérisé en ce que** la couche d'hologramme d'exposition (80) est appliquée sur l'une des couches de substrat (50) des deux couches de substrat (25) au moyen d'un processus de déroulement et/ou de laminage.

2. Procédé selon la revendication 1, **caractérisé en ce que** l'adhésif (91) est appliqué sur toute la surface d'une surface extérieure (81) de la couche d'hologramme d'exposition (80) et est ensuite appliqué sur une couche de substrat (50) des deux couches de substrat (25) de la pluralité de couches de substrat (20) avant ou lors de la superposition des couches de substrat (20), de sorte que, tout autour de la couche d'hologramme d'exposition (80) appliquée, une zone plane (55) de l'une des deux couches de substrat (25) de la pluralité de couches de substrat (20) n'est pas recouverte par la couche d'hologramme d'exposition (80) et l'adhésif (91) est disposé entre l'une des surfaces extérieures (81) de la couche d'hologramme d'exposition (80) et l'une des couches de substrat (50) des deux couches de substrat (25) de la pluralité de couches de substrat.

3. Procédé selon la revendication 1 ou 2, **caractérisé en ce que** l'adhésif (91) est durci.

4. Procédé selon l'une quelconque des revendications 1 à 3, **caractérisé en ce que** la l'adhésif (91) présente un tack et la couche d'hologramme d'exposition (80) est fixée au moyen du tack lors de l'application sur l'une des couches de substrat (50) des deux couches de substrat (25) de la pluralité de couches de substrat (20).

5. Procédé selon l'une des revendications 1 à 4, **caractérisé en ce que**, en plus de l'une surface extérieure (81) de la couche d'hologramme d'exposition (80), une surface extérieure opposée (82) de la couche d'hologramme d'exposition (80) est pourvue du même adhésif (91) ou d'un autre adhésif, de sorte qu'une surface extérieure (81) de la couche d'hologramme d'exposition (80) est liée à l'une des couches de substrat (50) des deux couches de substrat (25) au moyen de l'adhésif (91) et que la surface extérieure opposée (82) de la couche d'hologramme d'exposition (80) est liée à l'autre couche de substrat (40) des deux couches d'hologramme (20) au moyen de l'adhésif (91) ou de l'autre adhésif.
